# EUROPÄISCHE PATENTANMELDUNG

(11) **EP 2 071 821 A2**
(43) Veröffentlichungstag der Anmeldung: **17.06.2009**
(21) Anmeldenummer: 09004412.4
(22) Anmeldetag: 05.10.2001
(51) Int. Cl.: H04M 19/04

(54) **Auswahl eines Rufsignals**

(30) Priorität: 25.10.2000 DE 10052932
(62) Teilanmeldung aus: 01123889.6
(71) Anmelder: Siemens Aktiengesellschaft, 80333 München (DE)
(72) Erfinder: Beckmann, Mark, 38124 Braunschweig (DE); Bär, Siegfried, 90480 Nürnberg (DE); Choi, Hyung-Nam, 22117 Hamburg (DE); Gottschalk, Thomas, 82008 Unterhaching (DE); Hans, Martin, 31162 Bad Salzdetfurth/Heinde (DE); Kowalewski, Frank, Dr., 82008 Unterhaching (DE); Laumen, Josef, 81541 München (DE); Schmidt, Gunnar, Dr., 78052 Villingen-Schwenningen (DE)

(57) **Zusammenfassung**

Bei einem Verfahren zur Auswahl eines einen Verbindungswunsch eines anwählenden (M1) mit einem angewählten Telekommunikationsgerät (M2) signalisierenden Rufsignals (RS) wird das Rufsignal (RS) durch den das angewählte Telekommunikationsgerät (M2) Anwählenden (M1) bestimmt.

## Beschreibung

Die Erfindung betrifft ein Verfahren zur Auswahl eines Rufsignals nach dem Oberbegriff des Anspruchs 1 und des Anspruchs 2.

Es ist bekannt, bei Telekommunikationsgeräten, insbesondere Telekommunikationsendgeräten, aber auch bei etwa Verteilerstationen, die eine Rufweiterleitung an ein internes Netz vornehmen können, unterschiedliche Klingeltöne als Rufsignal zur akustischen Signalisierung eines eingehenden Anrufs auswählen zu können. Die Auswahl der Klingeltöne kann sich sowohl auf die Klingelmelodie als auch auf die Lautstärke beziehen.

Der Speicher insbesondere von mobilen Telekommunikationsendgeräten ist relativ klein dimensioniert. Daher ist die Auswahl von verschiedenen Rufsignalen eng begrenzt.

Eine Erweiterung der Speichermöglichkeiten ergibt sich dann, wenn nur diejenigen Klingeltöne gespeichert werden, die vom Benutzer beispielsweise des jeweiligen Telekommunikationsendgeräts gewünscht werden. Hierzu bieten einige Mobiltelefonhersteller auf ihrer Internet-Homepage verschiedene Klingeltöne an, die auf Anforderung als SMS an den Benutzer des Telekommunikationsgeräts versandt und dann dort gespeichert werden. Dieses Verfahren ist jedoch aufwendig. Zudem ist die Zahl der abspeicherbaren Klingeltöne durch die Speichergrenzen wiederum begrenzt.

Die so gespeicherten Klingeltöne können dann vom Benutzer in gleicher Weise eingestellt werden wie die von Anfang an im Telekommunikationsgerät gespeicherten Klingeltöne. So ist es beispielsweise möglich, einen bestimmten Klingelton einem möglichen Anrufer zuzuordnen, sofern dieser ein Erkennungssignal mit versendet, was etwa bei Nutzung von ISDN oder bei Anrufen in Mobilfunknetzen möglich ist. Der Anrufer muß allerdings dann vorher bekannt sein.

Je mehr Anrufer an individuellen Signalen erkennbar sein sollen, desto mehr wird wiederum der Speicher des Telekommunikationsgeräts belastet.

Aus der EP 0825751 A2 ist die Steuerung eines Telekommunikationsempfangsgerätes durch ein Telekommunikationssendegerät, bevor das Empfangsgerät in einen Zustand "OFF HOOK" wechselt, bekannt, bei der das Sendegerät beim Aufbau einer Verbindung zu dem Empfangsgerät zu einer Verbindungsaufbaunachricht Musik-Hinweisdaten ("musical note data") hinzufügt, die die Tonbeschaffenheit bzw. Melodie eines Rufsignals spezifizieren, und die Gesamtnachricht anschließend an das Empfangsgerät sendet. In dem Empfangsgerät wird entsprechend der übermittelten Musik-Hinweisdaten ein Rufsignal generiert. Auf diese Weise kann der Anrufer (Sendegerät) dem Angerufenen (Empfangsgerät) die Dringlichkeit eines Anrufes und das persönliche Empfinden mitteilen.

Aus der EP 0851649 A2 ist eine Einrichtung und ein Verfahren zum Programmieren eines Rufsignals bekannt, bei dem das Rufsignal in Form einer Rufsignalnachricht, die z.B. als SMS-Nachricht (Short Message Service) beschaffen sein kann und eine Kennung zum Kennzeichnen der Nachricht als Rufsignal beinhaltet, an ein Mobilfunkgerät gesendet wird. Beim Empfang der Rufsignalnachricht durch das Mobilfunkgerät identifiziert dieses das Rufsignal anhand der übermittelten Kennung und wandelt das Signal in eine für die Ausgabe mittels eines Signalgenerators und Speichers geeignete Form um.

Der Erfindung liegt das Problem zugrunde, den Einsatz von individuellen Rufsignalen zu erweitern.

Die Erfindung löst dieses Problem jeweils durch ein Verfahren mit den Merkmalen des Anspruchs 1 und des Anspruchs 2. Vorteilhafte Ausgestaltungen der Erfindung ergeben sich aus den abhängigen Ansprüchen 3 bis 5.

Mit dem erfindungsgemäßen Verfahren ist von Anrufern oder sonstigen Datenversendern, also Anwählenden, das jeweilige Rufsignal bestimmbar, es wird dem vom Anwählenden bestimmten Rufsignal eine Identifizierung zugeordnet ist, die entweder
gemäß **Anspruch 1** zur Einleitung einer Verbindung zunächst an den Angewählten übertragen und hierüber ermittelt wird, ob das entsprechende Rufsignal bereits im Speicher des Angewählten enthalten ist oder ob es zusätzlich zur Identifizierung noch übertragen werden muss oder
gemäß **Anspruch 2** an einen Server eines Netzbetreibers übertragen und wobei von da aus das Rufsignal (RS) an den Angewählten (M2) bzw. das angewählte Telekommunikationsgerät (M2) übertragen wird. Im Fall des Anspruchs 1 wird der Speicher von Angerufenen entlastet, während im Fall des Anspruchs 2 sowohl der Speicher des Angerufenen als auch des Anrufenden entlastet wird.

Der Anwählende kann darüber hinaus sein Signal individuell bestimmen und dabei beispielsweise allen seinen Anrufen das gleiche Rufsignal zuordnen, was auch beim Anwählenden für eine Speicherentlastung sorgt. Besonders vorteilhaft werden jedoch verschiedenen Anrufnummern auch verschiedene Rufsignale zugeordnet, so daß etwa im privaten Bereich schon mit dem Klingelton eine persönliche Begrüßung versandt werden kann, die auf den jeweils Angerufenen individualisiert ist. Im geschäftlichen Bereich ist besonders vorteilhaft das Rufsignal als Erkennungssignal für ein Unternehmen ausgebildet, etwa als Hörmarke. Dies ist möglich durch die Verwendung von kodierten, digitalisierten Rufsignalen, beispielsweise von im MP3- oder im MPEG-4-Standard kodierten Signalen. Diese Signale können Textbestandteile wie auch Melodien enthalten. Da das Speichern bei den Angerufenen erfindungsgemäß nicht mehr zwingend ist, kann ein größerer Datenumfang des Rufsignals hingenommen werden.

Die Möglichkeit, vom Anwählenden das Rufsignal zu bestimmen, ist insbesondere auch an einem Telekommunikationsendgerät, etwa auch einem Mobiltelekommunikationsgerät, verwirklicht und erfordert keine feste Basisstation, etwa eine ISDN-Anlage oder einen Computer.

Weitere Vorteile und Einzelheiten ergeben sich aus nachfolgend beschriebenen und in der Zeichnung dargestellten Ausführungsbeispielen des Gegenstandes der Erfindung.

In der Zeichnung zeigt:
- Fig. 1: eine schematische Darstellung des erfindungsgemäßen Verfahrens bei gleichzeitiger Übertragung des den Verbindungsaufbau einleitenden Datensatzes und des Rufsignals,
- Fig. 2: eine schematische Darstellung des erfindungsgemäßen Verfahrens bei Übertragung des den Verbindungsaufbau einleitenden Datensatzes zeitlich nach dem Rufsignal,
- Fig. 3: eine schematische Darstellung des erfindungsgemäßen Verfahrens bei Übertragung des den Verbindungsaufbau einleitenden Datensatzes zeitlich vor dem Rufsignal.

In den Ausführungsbeispielen sind Verbindungen V1, V2, V3 zwischen Mobiltelekommunikationsgeräten M1, M2 dargestellt. Dies ist jedoch nicht zwingend. Auch bei fest verdrahteten Verbindungen ist die Erfindung anwendbar. Neben mobilen Endgeräten M1, M2 kommen beliebige andere Endgeräte oder auch Zwischenverteiler innerhalb einer Telekommunikationsanlage in Betracht. In jedem Fall sind ein anwählendes Telekommunikationsgerät M1 und ein angewähltes Telekommunikationsgerät M2 vorgesehen, zwischen denen eine mittelbare oder unmittelbare Verbindung V1, V2 oder V3 aufgebaut werden soll. Die Verbindung V1, V2, V3 ist nicht auf Telefonate beschränkt, sondern kann sich auf beliebigen Datenaustausch, etwa auch die Übertragung von Textdaten mit oder ohne Bild und/oder Ton, beziehen.

Vom anwählenden Telekommunikationsgerät M1 wird ein den Verbindungsaufbau einleitender Datensatz DV über ein jeweiliges Telekommunikationsnetz an das angewählte Telekommunikationsgerät M2 übertragen. Dieser Datensatz DV enthält die Identifizierung des angewählten Geräts M2.

Das Rufsignal RS kann vom Benutzer des anwählenden Geräts M1 entweder selbst komponiert oder aus einem Fundus bekannter Tonfolgen ausgewählt werden. Insbesondere ist es auch möglich, das Rufsignal RS selbst mit Texten, etwa über eine Mikrofoneingabe, zu versehen.

Die Rufsignale RS können für alle Anrufe, die vom anwählenden Gerät M1 ausgehen, gleich sein, um damit etwa im geschäftlichen Bereich immer das gleiche Erkennungssignal, beispielsweise "Siemens AG - guten Tag", eventuell untermalt durch eine kurze und etwa schon aus der Fernsehwerbung bekannte Erkennungsmelodie nach Art eines Jingles, als Rufsignal RS auszusenden.

Es ist auch möglich, daß der Benutzer des anwählenden Geräts M1 verschiedenen Rufnummern auch verschiedene Rufsignale RS zuordnet, um damit individuell auf den jeweiligen Angerufenen einzugehen. Dann werden bei Anwahl unterschiedlicher Rufnummern auch unterschiedliche Rufsignale RS ausgesandt, etwa "Hallo, Oma, ich bin's" bei Anwahl einer Rufnummer oder "Hallo Schatz, geh doch mal ans Telefon" bei Anwahl einer anderen Rufnummer.

Auch im geschäftlichen Bereich kann es sehr förderlich sein, im Rufsignal RS den jeweils Angerufenen namentlich anzusprechen. Dies gibt dem Angerufenen eine Aufwertung, seine Bereitschaft, das Gespräch anzunehmen, wird erhöht.

Es ist möglich, in das Rufsignal RS auch Bildbestandteile einzubetten, so daß auf dem Display des angewählten Geräts M2 etwa ein Firmenlogo anstelle der Rufnummer eingeblendet wird. Dies ist insbesondere dann sehr effektiv, wenn Gesprächspartner angewählt werden, die die Nummer des Anrufers nicht abgespeichert haben und daher auch keinen Namen des Anrufers in ihrem Display angezeigt bekommen.

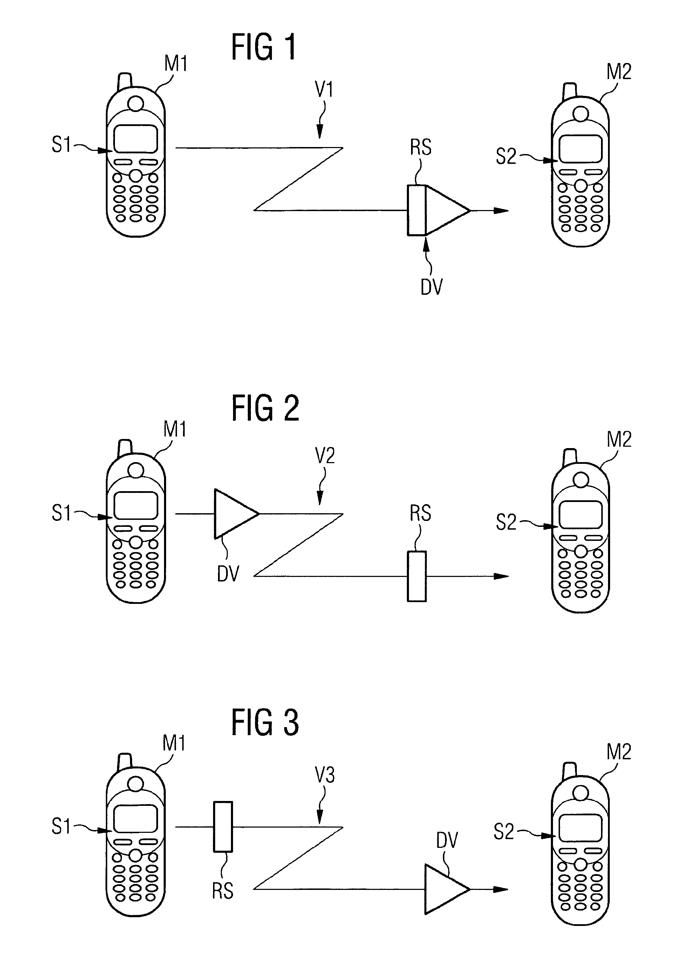

In einem ersten Ausführungsbeispiel (Fig. 1) wird als Bestandteil des Datensatzes DV das Rufsignal RS übersandt. Die Übertragung beider Signale DV und RS findet also gleichzeitig statt. Hierfür ist der Datensatz DV um beispielweise ein weiteres Feld erweitert, das das Rufsignal RS aufnimmt. Dieses ist etwa im MP-3- oder im MPEG-4-Format kodiert und wird in der kodierten und digitalisierten Form übertragen. Die Dekodierung kann dann beim angewählten Gerät M2 stattfinden, das heißt, daß das übertragene Rufsignal RS dann abgespielt wird und somit vom Benutzer des angewählten Geräts M2 akustisch und/oder optisch wahrnehmbar ist.

In einem zweiten Ausführungsbeispiel (Fig. 2) wird zunächst das Rufsignal RS übertragen und zeitlich nachfolgend der den Verbindungsaufbau einleitende Datensatz DV. Das Rufsignal RS ist dabei Bestandteil einer SMS (Short Message Service), die auch die Identifizierung des angewählten Geräts M2 enthält. Diese SMS wird beim Angewählten M2 in dessen Speicher S2 abgespeichert. Das Rufsignal RS wird bei der anschließenden Übertragung des die Verbindung einleitenden Datensatzes DV ausgelesen und dann ebenso verwendet, wie ein von vorneherein gespeichertes Anrufsignal als Ruftonfolge oder dergleichen verwendet würde.

In einem dritten Ausführungsbeispiel (Fig. 3) wird zunächst der den Verbindungsaufbau einleitende Datensatz DV und zeitlich nachfolgend das Rufsignal RS übertragen. Das Rufsignal RS ist dabei ebenfalls Bestandteil einer SMS, die auch die Identifizierung des Angewählten M2 enthält. Diese SMS wird im angewählten Gerät M2 abgespeichert. Im Datensatz DV ist dann eine Verzögerungsroutine enthalten, die das Abwarten der SMS bewirkt und die hierfür die Information enthält, daß die Signalisierung des Verbindungswunsches mit einem in Kürze nachfolgenden Rufsignal RS bewirkt werden soll. Das Rufsignal RS wird nach der anschließenden Übertragung der SMS ausgelesen und dann ebenso verwendet, wie ein von vorneherein gespeichertes Anrufsignal als Ruftonfolge oder dergleichen verwendet würde. Auch schon der aktuelle Anruf wird daher über das angewählte Gerät M2 mittels des nach dem die Verbindung einleitenden Datensatz DV übertragenen Rufsignals RS dem Angerufenen zur Kenntnis gebracht.

Bei allen Ausführungsbeispielen kann eine Abwandlung derart vorgesehen sein, daß nicht in jedem Fall das Rufsignal RS vom Anrufer übertragen wird, sondern zunächst eine Identifizierung an das angewählte Gerät M2 übersandt wird, die einem Rufsignal RS als Adressierung eindeutig zugeordnet ist und mittels deren Hilfe im Speicher S2 des angewählten Geräts M2 eine Suchroutine gestartet wird, ob dort das zu der Identifizierung gehörige Rufsignal RS bereits abgespeichert ist. Wenn dies der Fall ist, wird das abgespeicherte Signal RS als Signalisierung für den Anruf verwendet, ohne daß das Signal RS noch einmal übertragen werden müßte. Nur wenn es noch nicht beim Angewählten M2 gespeichert ist, muß es dann noch übertragen werden. Ein Abspeichern des Signals RS im Speicher des angewählten Geräts M2 kann etwa bei einem ersten Anruf dieses Geräts automatisiert oder nach einer Abfrage erfolgen.

Mit einer solchen Identifikation ist es auch möglich, daß Rufsignale RS nicht im Speicher S1 des Anrufers M1 abgelegt sein müssen, sondern etwa auf dem Server des Netzbetreibers. Dann bestimmt der Anwählende M1 immer noch das jeweilige Rufsignal RS, sendet jedoch nur die entsprechende Identifizierung an den Server, und von da aus wird das Rufsignal RS an das angewählte Gerät M2 übertragen. Damit ist sowohl beim angewählten als auch beim anwählenden Gerät M2, M1 der Speicher S2, S1 entlastet.

Insgesamt kann mit der Erfindung eine nahezu unerschöpfliche Zahl verschiedenster Rufsignale RS genutzt werden, ohne daß diese in einem Speicher S2 beim Empfänger abgelegt sein müßten. Die Möglichkeiten zur Individualisierung von Rufaufbauten sind damit erheblich vergrößert. Auch Anrufer, die vielleicht nur einmal mit einem angewählten Gerät M2 Kontakt aufnehmen, sind damit individualisierbar. Dadurch läßt sich eine verbesserte Kundenwerbung aufbauen. Insbesondere bei Verwendung gesprochener Texte als Rufsignale RS kann die Entscheidung, ob das Gespräch angenommen wird, beschleunigt werden. Es muß kein Blick auf das Display geworfen werden, sondern die Entscheidung über die Gesprächsannahme kann allein am akustischen Bestandteil des Rufsignals RS erfolgen. Damit läßt sich auch die Sicherheit des Angerufenen, etwa bei Telefonaten im Auto, verbessern.

## Patentansprüche

1. Verfahren zur Auswahl eines einen Verbindungswunsch eines anwählenden (M1) zu einem angewählten Telekommunikationsgerät (M2) signalisierenden Rufsignals (RS) , bei dem das Rufsignal (RS) durch den das angewählte Telekommunikationsgerät (M2) Anwählenden (M1) bestimmt wird,
**dadurch gekennzeichnet,**
**dass** dem vom Anwählenden (M1) bestimmten Rufsignal (RS) eine Identifizierung zugeordnet ist, diese zur Einleitung einer Verbindung zunächst an den Angewählten (M2) übertragen und hierüber ermittelt wird, ob das entsprechende Rufsignal (RS) bereits im Speicher (S2) des Angewählten (M2) enthalten ist oder ob es zusätzlich zur Identifizierung noch übertragen werden muss.

2. Verfahren zur Auswahl eines einen Verbindungswunsch eines anwählenden (M1) zu einem angewählten Telekommunikationsgerät (M2) signalisierenden Rufsignals (RS), bei dem das Rufsignal (RS) durch den das angewählte Telekommunikationsgerät (M2) Anwählenden (M1) bestimmt wird,
**dadurch gekennzeichnet,**
**dass** dem vom Anwählenden (M1) bestimmten Rufsignal (RS) eine Identifizierung zugeordnet ist, diese an einen Server eines Netzbetreibers übertragen und von da aus das Rufsignal (RS) an den Angewählten (M2) bzw. das angewählte Telekommunikationsgerät (M2) übertragen wird.

3. Verfahren nach Anspruch 1 oder 2,
**dadurch gekennzeichnet,**
**dass** das Rufsignal (RS) für einzelne Verbindungsaufbauten individuell auswählbar ist.

4. Verfahren nach einem der Ansprüche 1 bis 3,
**dadurch gekennzeichnet,**
**dass** das Rufsignal (RS) als akustisches Signal digitalisiert und im MP3- oder MPEG-4- oder einem vergleichbaren Code übertragen wird.

5. Verfahren nach Anspruch 4,
**dadurch gekennzeichnet,**
**dass** das Rufsignal (RS) eine Erkennungsmelodie mit oder ohne Textbestandteile umfasst.
